# EUROPEAN PATENT APPLICATION

(11) **EP 4 201 177 A1**
(43) Date of publication of application: **28.06.2023**
(21) Application number: 22213066.8
(22) Date of filing: 13.12.2022
(51) Int. Cl.: A01B 69/04, A01D 41/127, G05D 1/02

(54) **SYSTEM AND METHOD FOR GENERATING SWATH LINES FOR A WORK VEHICLE**

(30) Priority: 21.12.2021 US 202117557295
(71) Applicant: CNH Industrial Italia S.p.A., 10156 Torino (IT)
(72) Inventor: DIX, Phillip Duane, Westmont, 60559 (US); GEIYER, Daniel, Oshkosh, 54901 (US); SINGH, Aditya, Racine, 53404 (US); GULATI, Navneet, Racine, 53404 (US)
(74) Representative: CNH Industrial IP Department

(57) **Abstract**

A work vehicle (10) includes a location sensor (110) configured to capture data indicative of a location of the work vehicle (10) within a field. Additionally, the work vehicle (10) includes a computing system (112) communicatively coupled to the location sensor (110). In this respect, the computing system (112) is configured to control an operation of the plurality of components as the work vehicle (10) makes a pass across the field. Moreover, the computing system (112) is configured to record a travel path of the work vehicle (10) as the work vehicle (10) makes the pass across the field based on data captured by the location sensor (110). In addition, the computing system (112) is configured to analyze the recorded travel path to determine one or more geometric primitives of the recorded travel path. Furthermore, the computing system (112) is configured to generate a swath line for the pass based on the determined one or more geometric primitives.

## Description

### FIELD OF THE INVENTION

The present disclosure generally relates to work vehicles, such as agricultural vehicles or construction vehicles, and, more particularly, to systems and methods for generating swath lines for a work vehicle.

### BACKGROUND OF THE INVENTION

Modern farming practices strive to increase yields of agricultural fields. As such, agricultural work vehicles, such as tractors, sprayers, harvesters, and/or the like, are used to perform agricultural operations on a field. In general, when performing an agricultural operation, it is necessary for the work vehicle to make a series of passes across the field. However, it is difficult for an operator to control the work vehicle such that passes are consistent and uniformly spaced apart. Inconsistent or non-uniformly spaced passes may result in lower crop yields and/or inefficient performance of the agricultural operation. In this respect, systems have been developed for generating swath lines or guidance lines for guiding a work vehicle along each pass across the field. While such systems work well, further improvements are needed.

Accordingly, an improved system and method for generating swath lines for a work vehicle would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to a work vehicle. The work vehicle includes a frame configured to support a plurality of components of the work vehicle. Furthermore, the work vehicle includes a location sensor configured to capture data indicative of a location of the work vehicle within a field. Additionally, the work vehicle includes a computing system communicatively coupled to the location sensor. In this respect, the computing system is configured to control an operation of the plurality of components as the work vehicle makes a pass across the field. Moreover, the computing system is configured to record a travel path of the work vehicle as the work vehicle makes the pass across the field based on data captured by the location sensor. In addition, the computing system is configured to analyze the recorded travel path to determine one or more geometric primitives of the recorded travel path. Furthermore, the computing system is configured to generate a swath line for the pass based on the determined one or more geometric primitives.

In another aspect, the present subject matter is directed to a system for generating swath lines for a work vehicle. The system includes a location sensor configured to capture data indicative of a location of the work vehicle within a field. Additionally, the work vehicle includes a computing system communicatively coupled to the location sensor. In this respect, the computing system is configured to control an operation of the work vehicle as the work vehicle makes a pass across the field. Moreover, the computing system is configured to record a travel path of the work vehicle as the work vehicle makes the pass across the field based on data captured by the location sensor. In addition, the computing system is configured to analyze the recorded travel path to determine one or more geometric primitives of the recorded travel path. Furthermore, the computing system is configured to generate a swath line for the pass based on the determined one or more geometric primitives.

In a further aspect, the present subject matter is directed to a method for generating swath lines for a work vehicle. The work vehicle, in turn, includes a location sensor configured to capture data indicative of a location of the work vehicle within a field. The method includes controlling, with a computing system, an operation of the work vehicle as the work vehicle makes a pass across the field. Additionally, the method includes recording, with the computing system, a travel path of the work vehicle as the work vehicle makes the pass across the field based on data captured by the location sensor. Moreover, the method includes analyzing, with the computing system, the recorded travel path to determine one or more geometric primitives of the recorded travel path. In addition, the method includes generating, with the computing system, a swath line for the pass based on the determined one or more geometric primitives.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of a work vehicle and an associated agricultural implement in accordance with aspects of the present subject matter;
FIG. 2 illustrates a schematic view of one embodiment of a system for generating swath lines for a work vehicle in accordance with aspects of the present subject matter;
FIG. 3 illustrates a flow diagram providing one embodiment of control logic for generating swath lines for a work vehicle in accordance with aspects of the present subject matter;
FIG. 4 illustrates a diagrammatic view of example travel path of an agricultural implement in accordance with aspects of the present subject matter; and
FIG. 5 illustrates a flow diagram of one embodiment of a method for generating swath lines for a work vehicle in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a system and a method for generating swath lines for a work vehicle. Specifically, in several embodiments, a computing system of the disclosed system is configured to control the operation of the work vehicle as the vehicle makes a pass across the field. As the work vehicle makes the pass, the operator controls its direction of travel, while the computing system records its travel path. Furthermore, the computing system analyzes the recorded travel path to determine one or more geometric primitives of the recorded travel path. Such geometric primitives may include straight-line segments or curved line segments, such as circular, clothoid curve, polynomial spline, and/or B-spline line segments. For example, in some embodiments, the computing system may decompose the recorded travel path into a plurality of segments and determine a geometric primitive corresponding to each segment. Thereafter, the computing system generates a swath line for the pass based on the determined geometric primitive(s) (e.g., by combining the geometric primitive(s) together).

Analyzing a recorded travel path to determine one or more geometric primitives of the recorded travel path improves the operation of the work vehicle. More specifically, conventional systems for generating swath lines based on the recorded travel path of a work vehicle rely on the operator to classify the recorded travel path. For example, such conventional systems may require the operator to input via a series of menus that he/she intends to move along a circular path before guiding the vehicle along the circular path. This is time-consuming and distracting for the operator. Moreover, the operator may not be able to accurately determine the best geometry to describe the travel path of the vehicle. For example, operators generally cannot determine whether a portion of the travel path is a clothoid curve or a polynomial spline. Thus, conventional systems relying on operator input to classify the travel path may generate less accurate swath lines. This may, in turn, result in reduced crop yield or inefficient performance of the agricultural operation (e.g., the need to make unnecessary passes across the field, which wastes fuel and time). Moreover, swath lines generated by conventional systems may consume more computing resources than is necessary (e.g., when an operator incorrectly classifies a portion of the travel path as a more complex geometric shape than it actually is). However, as described above, with the disclosed system and method, a computing system automatically analyzes the travel path of the vehicle and determines the geometric primitives necessary accurately generate swath lines without any operator input. This, in turn, results in the generation of swath lines that more accurately reflect the actual travel path of the vehicle during the pass, while consuming fewer computing resources. More accurate swath lines, in turn, improve the agricultural performance and agricultural operation efficiency.

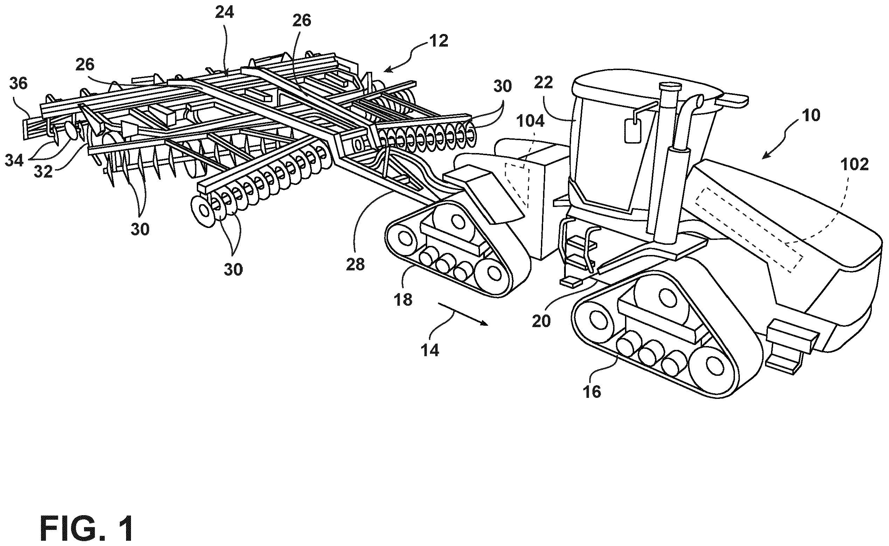

Referring now to the drawings, FIG. 1 illustrates a perspective view of a work vehicle 10 towing an associated agricultural implement 12 across a field in a direction of travel (indicated by arrow 14). In the illustrated embodiment, the work vehicle 10 is configured as an agricultural vehicle (e.g., an agricultural tractor) and the agricultural implement 12 is configured as a tillage implement (e.g., a disk ripper). However, in alternative embodiments, the work vehicle 10 may correspond to any other suitable type of agricultural vehicle (e.g., an agricultural harvester, a self-propelled sprayer, etc.) or construction vehicle (e.g., a dozer, a grader, a loader, etc.) and the agricultural implement 12 may correspond to any other suitable type of agricultural implement (e.g., a seed-planting implement, a towable sprayer, etc.). Additionally, in some embodiments, the vehicle 10 may not be configured to tow an implement.

As shown in FIG. 1, the vehicle 10 includes a pair of front track assemblies 16, a pair of rear track assemblies 18, and a frame or chassis 20 coupled to and supported by the track assemblies 16, 18. An operator's cab 22 may be supported by a portion of the chassis 20 and may house various input devices for permitting an operator to control the operation of one or more components of the vehicle 10 and/or one or more components of the implement 12. Furthermore, the vehicle 10 may include an engine 102 and a transmission 104 mounted on the chassis 20. The transmission 104 may be operably coupled to the engine 102 and may provide variably adjusted gear ratios for transferring engine power to the track assemblies 16, 18 via a drive axle assembly (not shown) (or via axles if multiple drive axles are employed).

Additionally, as shown in FIG. 1, the implement 12 includes a frame 24. More specifically, the frame 24 generally includes a plurality of structural frame members 26, such as beams, bars, and/or the like, which are configured to support or couple to a plurality of components. For example, as will be described below, the frame 24 may be configured to support one or more ground-engaging tools configured to perform an agricultural operation on a field as the implement 12 travels across the field. Furthermore, a hitch assembly 28 may be connected to the frame 24 and configured to couple the implement 12 to the vehicle 10.

In several embodiments, the frame 24 may support one or more gangs or sets of disk blades 30. Each disk blade 30 may, in turn, be configured to penetrate into or otherwise engage the soil as the implement 12 is pulled through the field. In this regard, the various gangs of disk blades 30 may be oriented at an angle relative to the direction of travel 14 to promote more effective tilling of the soil. In the embodiment shown in FIG. 1, the implement 12 includes four gangs of disk blades 30 supported on the frame 24 adjacent to its forward end. However, in alternative embodiments, the implement 12 may include any other suitable number of gangs. Furthermore, in one embodiment, the gangs of disk blades 30 may be mounted to the frame 24 at any other suitable location, such as adjacent to its aft end.

Moreover, in several embodiments, the implement frame 24 may be configured to support other ground-engaging tools. For instance, in the illustrated embodiment, the frame 24 is configured to support a plurality of shanks 32. As shown, the shanks 32 are spaced apart from each other on the frame 24 in a lateral direction of the implement 12. The lateral direction, in turn, extends perpendicular to the direction of travel 14. As such, the shanks 32 are configured to rip or otherwise till the soil as the implement 12 is towed across the field. Furthermore, in the illustrated embodiment, the frame 24 is also configured to support a plurality of leveling blades 34 and a plurality of rolling (or crumbler) basket assemblies 36 positioned aft of the shanks 32. In such an embodiment, the leveling blades 34 may be spaced apart from each other in the lateral direction. However, in other embodiments, any other suitable ground-engaging tools may be coupled to and supported by the implement frame 24.

The configuration of the work vehicle 10 and the associated agricultural implement 12 described above and shown in FIG. 1 is provided only to place the present subject matter in an exemplary field of use. Thus, the present subject matter may be readily adaptable to any manner of work vehicle and/or implement configuration.

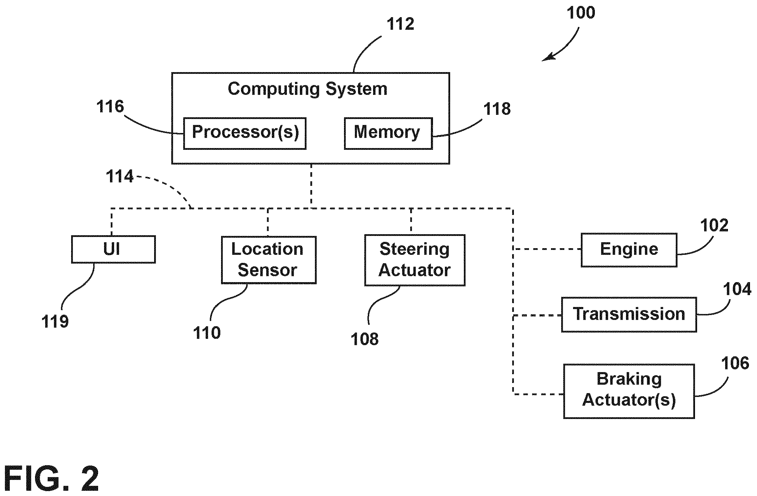

Referring now to FIG. 2, a schematic view of one embodiment of a system 100 for generating swath lines for a work vehicle is illustrated in accordance with aspects of the present subject matter. In general, the system 100 will be described herein with reference to the work vehicle 10 and the agricultural implement 12 described above with reference to FIG. 1. However, the disclosed system 100 may generally be used with work vehicles having any other suitable vehicle configuration and/or agricultural implements having any other suitable implement configuration.

As shown in FIG. 2, the system 100 includes one or more components of the work vehicle 10. For example, in the illustrated embodiment, the system 100 includes the engine 102 and the transmission 104 of the work vehicle 10. Additionally, in the illustrated embodiment, the system 100 includes one or more braking actuators 106 of the vehicle 10. In general, when activated, the braking actuator(s) 106 may reduce the speed at which the vehicle/implement 10/12 moves across the field, such as by converting energy associated with the movement of the vehicle/implement 10/12 into heat. For example, in one embodiment, the braking actuator(s) 106 may correspond to a suitable hydraulic cylinder(s) configured to push a stationary frictional element(s) (not shown), such as a brake shoe(s) or a brake caliper(s), against a rotating element(s) (not shown), such as a brake drum(s) or a brake disk(s). However, in alternative embodiments, the braking actuator(s) 106 may any other suitable hydraulic, pneumatic, mechanical, and/or electrical component(s) configured to convert the rotation of the rotating element(s) into heat.

Furthermore, in several embodiments, the system 100 may include a steering actuator 108 of the work vehicle 10. In general, the steering actuator 108 is configured to adjust the direction of travel 14 of the work vehicle 10. For example, the steering actuator 108 may correspond to an electric motor, an electric linear actuator, a hydraulic cylinder, a pneumatic cylinder, or any other suitable actuator coupled to suitable mechanical assembly, such as a rack and pinion or a worm gear assembly.

Moreover, the system 100 includes a location sensor 110 may be provided in operative association with the work vehicle 10 and/or the implement 12. In general, the location sensor 110 may be configured to determine or otherwise capture data indicative of the current location of the work vehicle 10 and/or the associated implement 12 using a satellite navigation positioning system (e.g., a GPS system, a Galileo positioning system, the Global Navigation satellite system (GLONASS), the BeiDou Satellite Navigation and Positioning system, and/or the like). In such an embodiment, the location data captured by the location sensor 110 may be transmitted to a computing system of the work vehicle 10 and/or the implement 12 (e.g., in the form coordinates) and stored within the computing system's memory for subsequent processing and/or analysis. Thus, the location data received from the location sensor 110 may be used to geo-locate the vehicle 10 within the field, thereby allowing for recording of the travel path of the vehicle/implement 10/12 across the field.

In addition, the system 100 includes a computing system 112 communicatively coupled to one or more components of the work vehicle 10, the implement 12, and/or the system 100 to allow the operation of such components to be electronically or automatically controlled by the computing system 112. For instance, the computing system 112 may be communicatively coupled to the location sensor 110 via a communicative link 114. As such, the computing system 112 may be configured to receive data (e.g., coordinates) from the location sensor 110 that is indicative of the location of the vehicle/implement 10/12 within the field. Furthermore, the computing system 112 may be communicatively coupled to various components of the vehicle 10, such as the engine 102, the transmission 104, the braking actuator(s) 106, and/or the steering actuator 108, via the communicative link 114. In this respect, the computing system 112 may be configured to control the operation of such components 102, 104, 106, 108 to the operation of the vehicle/implement 10/12 (e.g., its direction of travel 14, ground speed, etc.). In addition, the computing system 112 may be communicatively coupled to any other suitable components of the vehicle 10, the implement 12, and/or the system 100.

In general, the computing system 112 may comprise one or more processor-based devices, such as a given controller or computing device or any suitable combination of controllers or computing devices. Thus, in several embodiments, the computing system 112 may include one or more processor(s) 116 and associated memory device(s) 118 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 118 of the computing system 112 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 118 may generally be configured to store suitable computer-readable instructions that, when implemented by the processor(s) 116, configure the computing system 112 to perform various computer-implemented functions, such as one or more aspects of the methods and algorithms that will be described herein. In addition, the computing system 112 may also include various other suitable components, such as a communications circuit or module, one or more input/output channels, a data/control bus and/or the like.

The various functions of the computing system 112 may be performed by a single processor-based device or may be distributed across any number of processor-based devices, in which instance such devices may be considered to form part of the computing system 112. For instance, the functions of the computing system 112 may be distributed across multiple application-specific controllers or computing devices, such as a navigation controller, an engine controller, a transmission controller, an implement controller, and/or the like.

In addition, the system 100 may also include a user interface 119. More specifically, the user interface 119 may be configured to provide feedback from the computing system 112 (e.g., feedback associated with generated swath lines) to the operator. As such, the user interface 119 may include one or more feedback devices (not shown), such as display screens, speakers, warning lights, and/or the like, which are configured to provide feedback from the computing system 112 to the operator. As such, the user interface 119 may, in turn, be communicatively coupled to the computing system 112 via the communicative link 114 to permit the feedback to be transmitted from the computing system 112 to the user interface 119. Furthermore, some embodiments of the user interface 119 may include one or more input devices, such as touchscreens, keypads, touchpads, knobs, buttons, sliders, switches, mice, microphones, and/or the like, which are configured to receive inputs from the operator. In one embodiment, the user interface 119 may be mounted or otherwise positioned within the cab 22 of the work vehicle 10. However, in alternative embodiments, the user interface 119 may mounted at any other suitable location.

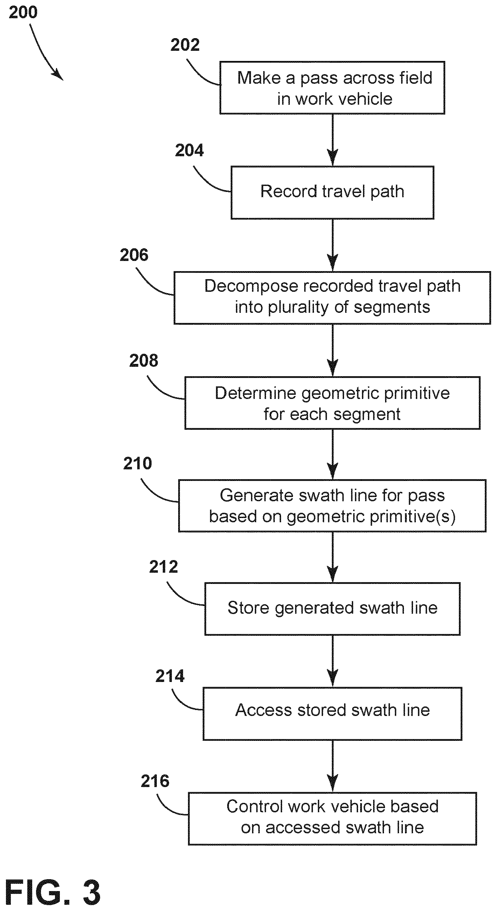

Referring now to FIG. 3, a flow diagram of one embodiment of control logic 200 that may be executed by the computing system 112 (or any other suitable computing system) for generating swath lines for a work vehicle is illustrated in accordance with aspects of the present subject matter. Specifically, the control logic 200 shown in FIG. 3 is representative of steps of one embodiment of an algorithm that can be executed to generate swath lines for a work vehicle that allows the vehicle to make more accurate passes across the field, thereby improving agricultural outcomes and the efficiency of the agricultural operation. Thus, in several embodiments, the control logic 200 may be advantageously utilized in association with a system installed on or forming part of a work vehicle to allow for real-time generation of swath lines for a work vehicle without requiring substantial computing resources and/or processing time. However, in other embodiments, the control logic 200 may be used in association with any other suitable system, application, and/or the like for generating swath lines for a work vehicle.

As shown, at (202), the control logic 200 includes controlling the operation of a work vehicle as the work vehicle makes a pass across a field. Specifically, in several embodiments, the computing system 112 is configured to control the operation of one or more components of the work vehicle 10 and/or the associated implement 12 as the vehicle/implement 10/12 makes a pass across the field (e.g., to perform an agricultural operation thereon). For example, the computing system 112 may transmit control signals to the engine 102, the transmission 104, and/or the braking actuator(s) 106 via the communicative link 114 to control the operation of such components 102, 104, 106 during the pass.

As the vehicle/implement 10/12 makes the pass across the field, the operator may control the direction of travel 14 of the vehicle/implement 10/12. For example, during the pass, the operator may control the operation of the steering actuator 108 via a steering wheel, a joystick, or any other suitable input device. Thus, the operator generally controls or otherwise dictates the travel path of the vehicle/implement 10/12 during the pass.

Furthermore, at (204), the control logic 200 includes recording the travel path of the work vehicle as the vehicle make the pass across the field based on data captured by a location sensor. Specifically, as mentioned above, in several embodiments, the computing system 112 may be communicatively coupled to the location sensor 110 via the communicative link 114. In this respect, as the vehicle/implement 10/12 makes the pass across the field, the computing system 112 may receive data (e.g., coordinates) from the location sensor 110. Such data may, in turn, be indicative of the location of the vehicle/implement 10/12 within the field during the pass. Based on the received data, the computing system 112 records to the travel path of the vehicle/implement 10/12 during the pass. As will be described below, the recorded travel path of the vehicle/implement 10/12 during the pass is analyzed to determine one or more geometric primitives of the recorded travel path. Thereafter, a swath line for the pass is generated based on the determined geometric primitive(s).

Additionally, at (206), the control logic 200 includes decomposing the recorded travel path into a plurality of segments. Specifically, in several embodiments, the computing system 112 may be configured to decompose or otherwise break up the travel path of the vehicle/implement 10/12 recorded at (204) into a plurality of segments. For example, the computing system 112 may analyze the recording travel path of the vehicle/implement 10/12 to decompose or break it into a plurality segments. As will be described below, each segment corresponds to a geometric primitive that is then used to generate swath line for the pass made by the vehicle/implement 10/12.

The travel path may be decomposed into a plurality of segments in any suitable manner. In some embodiments, the segments may have the same length. For example, in such embodiments, the recorded travel path is decomposed into a plurality of segments corresponding to the same length. In other embodiments, the recorded travel path may be broken into different sized segments based on the shape of the travel path. For example, in such embodiments, the computing system 112 may identify and use inflection points, sharp angles (e.g., angles having a value greater than a threshold value), changes in curvature, and/or the like to decompose the travel path.

Moreover, at (208), the control logic 200 includes determining a geometric primitive for each segment of the recorded travel path. In general, the determined geometric primitive is a two-dimensional line segment fitted to or otherwise approximating the geometric shape of the corresponding segment of the recorded travel path. Specifically, in several embodiments, the computing system 112 is configured to analyze each of the decomposed segments of the travel path of the vehicle/implement 10/12 to determine a corresponding geometric primitive. As will be described below, the geometric primitives determined at (208) are then used to form a swath line for the pass.

Any suitable geometric primitive may be determined for the segments of the recorded travel path at (206). More specifically, the geometric primitives may be a combination of straight-line segments and curved line segments. For example, the curved line segments may include circular, clothoid curve, polynomial spline, and/or B-spline line segments. However, the determined geometric primitives may include any other suitable type of curved line segments.

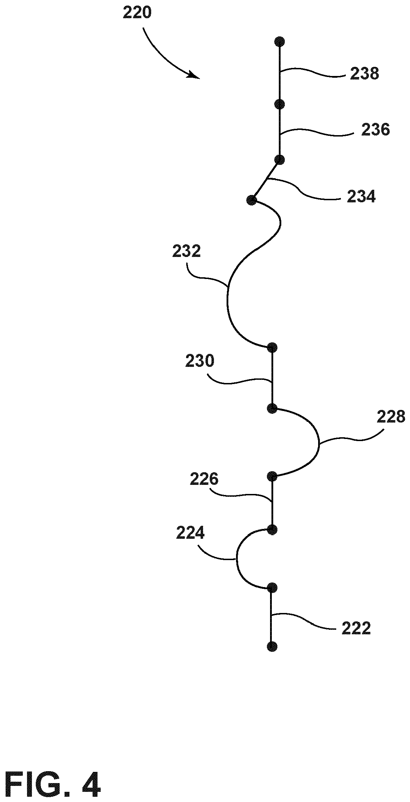

FIG. 4 illustrates a diagrammatic view of an example recorded travel path 220 for the vehicle/implement 10/12. As shown, the recorded travel path 220 has been decomposed into a plurality of segments 222, 224, 226, 228, 230, 232, 234, 236, 238. In this respect, the computing system 112 may determine that that the geometric primitives for the segments 222, 226, 230, 236, and 238 are straight line segments. Furthermore, the computing system 112 may determine that that the geometric primitives for the segments 224 and 228 are circular line segments. In addition, the computing system 112 may determine that that the geometric primitive for the segments 232 is a clothoid curve line segment.

The computing system 112 may determine a geometric primitive for each segment of the recorded travel path of the vehicle/implement 10/12 at (208) in any suitable manner. For example, the computing system 112 may use linear curve fitting, non-linear curve fitting, fuzzy logic, a neural network(s) (e.g., a convolutional neural network), analysis of geometric properties, and/or the like.

Furthermore, in certain instances, the computing system 112 may determine multiple geometric primitives for a given segment of the recorded travel path. In such instances, the computing system 112 may determine the fit of each geometric primitive. Thereafter, the computing system 112 may assign the geometric primitive that best fits the given segment of the travel path to that segment.

Referring again to FIG. 3, at (210), the control logic 200 includes generating a swath line for the pass based on the determined geometric primitive(s). Specifically, in several embodiments, the computing system 112 is configured to generate swath line for the pass made by the vehicle/implement 10/12 based on the geometric primitives determined at (208). For example, the computing system 112 may combine the geometric primitives (e.g., join the determined geometric primitives together end to end) to form a continuous (and not discrete) swath line corresponding to the pass across the field. Thus, the generated swath provides an accurate, highly reproducible, and continuous indication of the travel path of the vehicle/implement 10/12 that can be easily followed by the vehicle/implement 10/12 at a later time or by another vehicle.

Analyzing a recorded travel path to determine one or more geometric primitives of the recorded travel path improves the operation of the vehicle 10. More specifically, conventional systems for generating swath lines based on the recorded travel path of a work vehicle rely on the operator to classify the recorded travel path. For example, such conventional systems may require the operator to input via a series of menus that he/she intends to move along a circular path before guiding the vehicle along the circular path. This is time-consuming and distracting for the operator. Moreover, the operator may not be able to accurately determine the best geometry to describe the travel path of the vehicle. For example, operators generally cannot determine whether a portion of the travel path is a clothoid curve or a polynomial spline. Thus, conventional systems relying on operator input to classify the travel path may generate less accurate swath lines. This may, in turn, result in reduced crop yield or inefficient performance of the agricultural operation (e.g., the need to make unnecessary passes across the field, which wastes fuel and time). Moreover, swath lines generated by conventional systems may consume more computing resources than is necessary (e.g., when an operator incorrectly classifies a portion of the travel path as a more complex geometric shape than it actually is). However, as described above, the computing system 112 automatically analyzes the travel path of the vehicle/implement 10/12 and determines the geometric primitives necessary accurately generate swath lines without any operator input. This, in turn, results in the generation of swath lines that more accurately reflect the actual travel path of the vehicle/implement 10/12 during the pass, while consuming fewer computing resources. More accurate swath lines, in turn, improve the agricultural performance and agricultural operation efficiency.

(202) - (210) of the control logic 200 was described above in the context of the vehicle/implement 10/12 making a single pass across a field. In this respect, (202) - (210) may be repeated for additional passes across the field.

Furthermore, at (212), the control logic 200 includes storing the generated swath line(s) within one or more memory devices. Specifically, in several embodiments, the computing system 112 may be configured to store the generated swath line(s) (e.g., the swath line(s) generated at (210)) within its memory device(s) 118 (or any other suitable memory device(s)) for subsequent use.

Additionally, at (214), the control logic 200 includes accessing the stored swath line(s) from the one or more memory devices. Specifically, in several embodiments, the computing system 112 may be configured to access the stored continuous swath line(s) from its memory device(s) 118 (or any other suitable memory device(s)). For example, the accessed continuous swath line(s) may be used to guide the vehicle/implement 10/12 across the field at a later time (e.g., to perform another agricultural operation) of to guide a second work vehicle across the field.

Moreover, at (216), the control logic 200 includes controlling the operation of a work vehicle such that the vehicle automatically travels along the accessed swath line(s). Specifically, in several embodiments, the computing system 112 is configured to control the operation of the vehicle/implement 10/12 across the field during a subsequent agricultural operation such that the vehicle/implement 10/12 automatically travels along the swath line(s) accessed at (214). For example, the computing system 112 may transmit control signals to the steering actuator 108 of the vehicle 10 via the communicative link 114. The control signals, in turn, instruct the steering actuator to automatically adjust the direction of travel 14 of the vehicle/implement 10/12 such that the vehicle/implement 10/12 travels along the accessed swath line(s). Additionally, or alternatively, the computing system 112 may be configured to control the operation of a second vehicle across the field (e.g., during a subsequent agricultural operation) such that the second vehicle automatically travels along the swath line(s) accessed at (214).

In addition, the computing system 112 may be configured to display any of the generated, stored, and/or accessed swath lines to the operator of the vehicle/implement 10/12 and or the second vehicle. For example, the computing system 112 may initiate display of any such swath lines on the user interface 119.

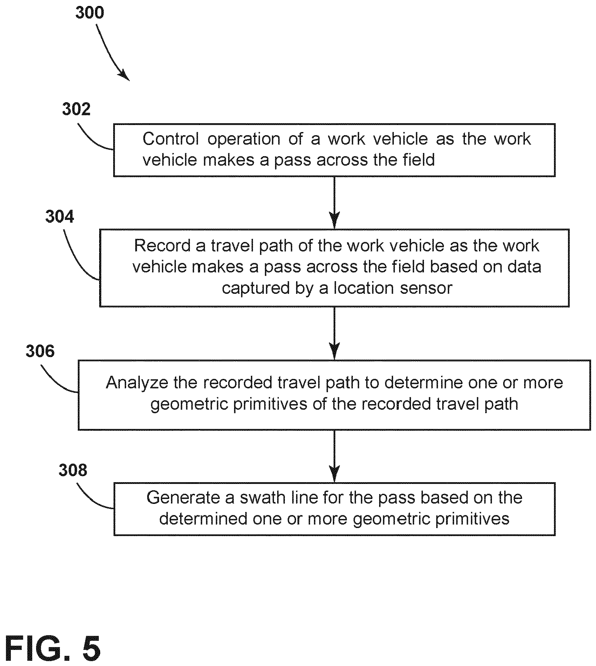

Referring now to FIG. 5, a flow diagram of one embodiment of a method 300 for generating swath lines for a work vehicle is illustrated in accordance with aspects of the present subject matter. In general, the method 300 will be described herein with reference to the work vehicle 10, the agricultural implement 12, and the system 100 described above with reference to FIGS. 1-4. However, the disclosed method 300 may generally be implemented with any work vehicle having any suitable vehicle configuration, with any agricultural implement having any suitable implement configuration, and/or any within system having any suitable system configuration. In addition, although FIG. 5 depicts steps performed in a particular order for purposes of illustration and discussion, the methods discussed herein are not limited to any particular order or arrangement. The various steps of the methods disclosed herein can be omitted, rearranged, combined, and/or adapted in various ways without deviating from the scope of the present disclosure.

As shown in FIG. 5, at (302), the method 300 includes controlling, with a computing system, the operation of a work vehicle as the work vehicle makes a pass across the field. For instance, as described above, the computing system 112 may control operation of one or more components of the work vehicle 10, such as the engine 102, the transmission 104, and/or the braking actuator(s) 106, as the work vehicle 10 makes a pass across a field (e.g., to perform an agricultural operation thereon).

Additionally, at (304), the method 300 includes recording, with the computing system, a travel path of the work vehicle across the field based on data captured by a location sensor. For instance, as described above, the computing system 112 may record the travel path of the work vehicle 10 across the field based on data (e.g., coordinates) captured by and received from the location sensor 110.

Moreover, as shown in FIG. 5, at (306), the method 300 may include analyzing, with the computing system, the recorded travel path to determine one or more geometric primitives of the recorded travel path. For instance, as described above, the computing system 112 may be configured to analyze the recorded travel path to determine one or more geometric primitives of the recorded travel path.

Furthermore, at (308), the method 300 may include generating, with the computing system, a swath line for the pass based on the determined one or more geometric primitives. For instance, as described above, the computing system 112 may be configured to generate a swath line for the pass based on the determined geometric primitive(s).

It is to be understood that the steps of the control logic 200 and the method 300 are performed by the computing system 112 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 112 described herein, such as the control logic 200 and the method 300, is implemented in software code or instructions which are tangibly stored on a tangible computer readable medium. The computing system 112 loads the software code or instructions via a direct interface with the computer readable medium or via a wired and/or wireless network. Upon loading and executing such software code or instructions by the computing system 112, the computing system 112 may perform any of the functionality of the computing system 112 described herein, including any steps of the control logic 200 and the method 300 described herein.

## Claims

1. A system (100) for generating swath lines for a work vehicle (10), the system (100) comprising a location sensor (110) configured to capture data indicative of a location of the work vehicle (10) within a field and a computing system (112) communicatively coupled to the location sensor (110), the computing system (112) configured to control an operation of the work vehicle (10) as the work vehicle (10) makes a pass across the field and record a travel path of the work vehicle (10) as the work vehicle (10) makes the pass across the field based on data captured by the location sensor (110), the system (100) **characterized by** the computing system (112) being further configured to:
analyze the recorded travel path to determine one or more geometric primitives of the recorded travel path; and
generate a swath line for the pass based on the determined one or more geometric primitives.

2. The system (100) as in claim 1, wherein, when analyzing the recorded travel path, the computing system (112) is further configured to:
decompose the recorded travel path into a plurality of segments; and
determine a geometric primitive corresponding to each segment of the plurality of segments.

3. The system (100) as in any preceding claim, wherein, when generating the swath line, the computing system (112) is further configured to combine the determined geometric primitive of each of the plurality of segments together to form the swath line.

4. The system (100) as in any preceding claim, wherein, when generating the swath line, the computing system (112) is further configured to generate a continuous swath line for the pass based on the determined one or more geometric primitives.

5. The system (100) as in any preceding claim, wherein the one or more geometric primitives comprise at least one of a straight-line segment or a curved line segment.

6. The system (100) as in any preceding claim, wherein the curved line segment comprises a circular line segment, a clothoid curve line segment, a polynomial spline line segment, or a B-spline line segment.

7. The system (100) as in any preceding claim, wherein a direction of travel of the work vehicle (10) is controlled by an operator of the work vehicle (10) when the work vehicle (10) makes the pass across the field.

8. The system (100) as in any preceding claim, wherein the computing system (112) is further configured to store the generated swath line within one or more memory devices (118).

9. The system (100) as in any preceding claim, wherein the work vehicle (10) corresponds to a first work vehicle (10), the computing system (112) further configured to access the stored swath line from the one or more memory devices (118) for use in guiding a second work vehicle (10) across the field.

10. A method (300) for generating swath lines for a work vehicle (10), the work vehicle (10) including a location sensor (110) configured to capture data indicative of a location of the work vehicle (10) within a field, the method (300) comprising controlling, with a computing system (112), an operation of the work vehicle (10) as the work vehicle (10) makes a pass across the field and recording, with the computing system (112), a travel path of the work vehicle (10) as the work vehicle (10) makes the pass across the field based on data captured by the location sensor (110), the method (300) **characterized by**:
analyzing, with the computing system (112), the recorded travel path to determine one or more geometric primitives of the recorded travel path; and
generating, with the computing system (112), a swath line for the pass based on the determined one or more geometric primitives.

11. The method (300) as in claim 10, wherein analyzing the recorded travel path comprises:
decomposing, with the computing system (112), the recorded travel path into a plurality of segments; and
determining, with the computing system (112), a geometric primitive corresponding to each segment of the plurality of segments.

12. The method (300) as in any of claims 10 or 11, wherein generating the swath line comprises combining, with the computing system (112), the determined geometric primitive of each of the plurality of segments together to form the swath line.

13. The method (300) as in any of claims 10 through 12, wherein generating the swath line comprises generating, with the computing system (112), a continuous swath line for the pass based on the determined one or more geometric primitives.

14. The method (300) as in any of claims 10 through 13, wherein the one or more geometric primitives comprise at least one of a straight-line segment or a curved line segment.

15. The method (300) as in any of claims 10 through 14, wherein the curved line segment comprises a circular line segment, a clothoid curve line segment, a polynomial spline line segment, or a B-spline line segment.
